(19) Europäisches Patentamt
European Patent Office
Office européen des brevets

(11) EP 2 606 176 B1

(12) **EUROPEAN PATENT SPECIFICATION**

(45) Date of publication and mention of the grant of the patent:
**08.10.2014 Bulletin 2014/41**

(21) Application number: **11748971.6**

(22) Date of filing: **19.08.2011**

(51) Int Cl.:
***D21C 11/12*** *(2006.01)*

(86) International application number:
**PCT/GB2011/001255**

(87) International publication number:
**WO 2012/022949 (23.02.2012 Gazette 2012/08)**

(54) **THERMAL TREATMENT**

WÄRMEBEHANDLUNG

TRAITEMENT THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2010 GB 201014020**

(43) Date of publication of application:
**26.06.2013 Bulletin 2013/26**

(73) Proprietor: **Aston University**
**Birmingham B4 7ET (GB)**

(72) Inventors:
- **BRIDGWATER, Anthony, Victor**
**Solihull B93 9LA (GB)**
- **JIANG, Guozhan**
**Birmingham B32 3ET (GB)**

(74) Representative: **Oxley, Rachel Louise et al**
**Mewburn Ellis LLP**
**33 Gutter Lane**
**London**
**EC2V 8AS (GB)**

(56) References cited:

| | |
|---|---|
| **EP-A1- 2 309 056** | **EP-A2- 2 072 600** |
| **WO-A1-95/08022** | **WO-A2-2010/045576** |
| **US-A1- 2008 185 112** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 606 176 B1

**Description**

## BACKGROUND TO THE INVENTION

### Field of the invention

The present invention relates to thermal treatment, such as thermal treatment of lignin, and apparatus for thermal treatment e.g. of lignin. In particular, it relates to pyrolysis of lignin.

### Related Art

Lignin is a component of cell walls of plants. It provides strengthening support to trees, and contributes to enabling plants to conduct water efficiently.

Lignin is available as a by-product of industrial processes including pulping and paper making. In these processes, lignin may be removed from plant material such as wood, and so may be produced as a by-product.

Processing of lignin is of particular interest because it can result in the production of useful and valuable products, such as phenolic compounds. Phenolic compounds include those having the moiety Ph-O-, wherein the phenyl group may be further substituted. Examples include phenol, catechol, guaiacol, syringol and vanillin. Other products of lignin processing include aromatic hydrocarbon products, for example benzene, toluene and naphthalene.

The phenolic compounds produced from lignin processing may be useful as they are, or as starting materials in chemical synthesis of other products.

Processing of lignin into phenolic compounds has been attempted since the beginning of modern paper and pulp industry because of its aromatic nature (1). In recent years, with an increasing production of cellulosic ethanol and the use of organosolv pulping processes, lignin processing has become more urgent and challenging. This is because the lignin produced in these two processes may not be burned to get process energy and to recycle pulping agents. In the Kraft pulping process, in contrast, lignin by-product can be recycled and used in the process (2, 3).

Lignin may be processed by pyrolysis in order to produce, among other products, phenolic compounds. Pyrolysis is thermal decomposition of a substance (e.g. biomass, or lignin) in the substantial absence of oxygen (21).

The rate and extent of decomposition of the substance subjected to pyrolysis depends on the process parameters of the pyrolysis, for example the rate of heating of the substance, the mode of heating the substance, and the residence time of the products. In turn, these process parameters may also have an effect on the subsequent behaviour of the product, e.g. by secondary reactions such as cracking (of the higher molecular mass products) or condensation reactions (of lower molecular mass products).

Pyrolysis can be carried out using fast heating rates and short hot vapour residence times. Such "fast" pyrolysis processes are reviewed in Bridgwater et al (10, 22), which focuses on pyrolysis of biomass. For example, fast pyrolysis may employ reaction temperatures of about 500°C and hot vapour residence times of less than around 1 second.

In general, pyrolysis is a relatively simple process, which can be conducted at atmospheric pressure. However, pyrolysis of lignin (e.g. lignin derived from plant material such as wood) has not been straightforward. This is at least in part due to the low melting point range of lignin (80-200°C), and the fact that lignin, and particularly lignin melt, is very adhesive. As a result, it tends to melt before entering a pyrolysis reaction chamber, which is usually above about 500°C, leading to blocking of the feeding system. In addition, lignin tends to cause char and other solids present in the reaction chamber to agglomerate. This can lead to the formation of solid deposits, for example on the feeding system and reaction chamber walls. This can block the reactor and stop it from functioning properly.

In the case of a fluidised bed pyrolysis reactor, pyrolysis of the melted lignin tends to produce a char agglomerate with the solid particles (e.g. sand) of the fluidised bed, which forms large pieces, leading to defluidization of the bed.

These problems have significantly limited the success of reported lignin pyrolysis. Some papers report success in micro-scale experiments with a sample size of milligrams (4, 5 and 6).

There are some reports of bench-scale pyrolysis. In 1980s, Kaminsky et al (7) studied the fast pyrolysis of ethanol lignin and Kraft lignin using fluid bed reactor. The use of screw feeders was not successful due to the blockage at the end of the screw. Finally they compressed the lignin into pellets with the addition of 3% stearic acid and 2% polyvinylpyrrolidone and fed the pellets batchwise from the top of the reactor via two air-lock valves in serial. However, the maximum feeding was only 30-40 g because of the defluidization caused by char-sand agglomeration.

Fluid bed reactor bench-scale pyrolysis of lignin has been conducted at Aston University (UK) (8) and ECN (Netherlands) (9). The work at Aston allowed only several grams of feeding. ECN tested two types of feeding methods to a fluid bed reactor. One was batchwise, in which 50g Alcell lignin was fed into the reactor. The reactor was defluidised immediately. ECN also designed a new type of screw feeder with a cooling system in the centre of the screw. Two hours' continuous running was achieved at 400°C. This is a rather low temperature for lignin pyrolysis. They did not report the results of higher temperature. Probably, the screw feeder did not work well at high temperatures due to the effect of the

cooling system reducing at these higher temperatures.

WO2010/045576 discloses pyrolysis of substantially pure lignin product to yield fuel additives.

WO95/08022 discloses pyrolysis of a cellulose production process waste including black liquor.

## SUMMARY OF THE INVENTION

The present inventors have devised the present invention in order to address one or more of the above problems.

The present inventors have found that providing lignin to a pyrolysis reactor in the form of a paste can reduce the problems discussed above, associated with the low melting point and adhesiveness of lignin.

Accordingly, in a first aspect the present invention provides a process for the pyrolysis of lignin comprising the steps:

(a) feeding lignin into a reaction chamber; and
(b) performing pyrolysis on the paste in the reaction chamber,

characterised in that the lignin is suspended in a liquid component to form a paste.

In a further aspect, the present invention provides apparatus for the pyrolysis of lignin, comprising

a pyrolysis reaction chamber; and
a feeding assembly adapted to supply a paste comprising lignin suspended in a liquid component into the reaction chamber.

The apparatus may comprise a paste supply.

The paste is a mixture of lignin suspended in a liquid component. The present inventors have found that lignin is able to form a stable paste, when mixed with a liquid component, without phase separation after several days' standing.

The lignin may be the internal phase of the suspension, and the liquid may be the external phase of the suspension.

It may be preferred that a portion of the lignin is dissolved in the liquid, and a portion of the lignin is suspended in the liquid. For example, lower molecular weight lignin fractions may be dissolved, and higher molecular weight lignin fractions may be suspended. It is believed that dissolving a portion of the lignin in this way may contribute to the reduction in problems associated with lignin melting and adhesion discussed above.

The mass ratio of lignin to the liquid component may range from 1:5 to 10:1. Preferably, the mass ratio of lignin to the liquid component is at least 1:2, more preferably at least 1:1. Preferably, the mass ratio of lignin to the liquid component is not more than 10:1, more preferably not more than 5:1, 4:1 or 3:1. In a particularly preferred embodiment, the mass ratio of lignin to the liquid component may be from 1:1 to 3:1, for example from 1.5:1 to 2.5:1. Most preferably, the ratio is 2:1.

The viscosity of the paste may range from a lower limit at which the viscosity is approximately equal to or slightly higher than the viscosity of the liquid component alone (for example , the viscosity of the liquid component alone at 25°C at atmospheric pressure), to an upper limit where it is significantly more viscous than the liquid component but still flowable into the reaction chamber. For example, the paste may be a slurry.

It will be understood that the present invention is particularly applicable to extracted lignin, e.g. lignin which has been extracted from biological material, such as plant material. The lignin may be provided to the paste in the form of lignin powder or granules.

Suitable sources of lignin (e.g. extracted lignin) include lignin produced in processes for the production of cellulosic ethanol, and pulping processes such as organosolve pulping processes. For example, when cellulose is hydrolyzed into sugars for fermentation to ethanol, typically the insoluble residue includes lignin and incompletely hydrolysed cellulose. This solid residue may be used in the process of the invention. The proportion of lignin included in the residue may be increased by dissolving the lignin from the cellulose then precipitating it.

Accordingly, the skilled person will understand that in some embodiments the lignin (e.g. extracted lignin) may be provided to the paste as a lignin-containing composition. Typically, the lignin-containing composition comprises at least 50wt% lignin, more preferably at least 60wt%, at least 65wt%, at least 70wt%, at least 75wt% or at least 80wt% lignin. The lignin-containing composition may comprise 100wt% of lignin, or may comprise 99wt% or less, 98wt% or less, 97wt% or less, 96wt% or less, 95wt% or less, 93wt% or less, or 90wt% or less of lignin.

The liquid component may be any substance which is capable of forming a paste when it is mixed with lignin. Preferably, the liquid component is capable of dissolving a portion of the lignin and suspending a portion of the lignin, as described above.

Particularly preferred as the liquid component is a polar compound, for example a polar solvent. The term polar solvent is well understood by the skilled person. It will be understood that the use of the word solvent here does not

imply that the lignin is dissolved, either fully or partially, in the solvent (although partial dissolving may be preferred as discussed above). Rather, the use of this term is based on the inventors' realisation that compounds commonly employed as polar solvents are particularly useful as components of the paste in the present invention.

The polar solvent may be, for example a polar organic solvent. The polar solvent may be a polar protic solvent, or a polar aprotic solvent. Of course, these terms are well understood by those skilled in the art.

Examples of polar solvents (protic and aprotic) useful as the liquid component include water, alcohols, ethers, esters, amides, ketones, haloalkyls, sulfoxides, nitriles and organic acids such as carboxylic acids.

Examples of suitable polar solvents for use as the liquid component include methanol, ethanol, n-propanol, i-propanol, n-butanol, i-butanol, t-butanol, methanoic acid, ethanoic acid, propionic acid, butyric acid, ethyl acetate, acetone, dimethylformamide (DMF), dichloromethane (DCM), tetrahydofuran (THF), acetonitrile and dimethylsulfoxide (DMSO).

Most preferably, the liquid component is an alcohol.

Where the liquid component is an alcohol, it may be a $C_1$-$C_{10}$ alcohol, for example $C_1$-$C_4$ alcohol. The alcohol may have the formula $R^1$-OH, wherein $R^1$ is $C_1$-$C_{10}$ alkyl, alkenyl or alkynyl which may be straight, branched or cyclic, preferably $C_1$-$C_4$ alkyl which may be straight or branched, for example straight. $R^1$ may be substituted, for example, with zero, one, two or three substituents. For example, the substituents may be selected from a halogen atom and a further hydroxyl group. The halogen atom may be, for example, fluorine, chlorine, bromine or iodine, preferably chlorine. However, it may be preferred that $R^1$ is unsubstituted.

Particularly preferred alcohols include methanol, ethanol, n-propanol, i-propanol, n-butanol, i-butanol and t-butanol. Most preferred is methanol.

Methanol is particularly preferred, as it is believed to be capable of dissolving a portion of the lignin, and suspending a portion of the lignin, as described above.

The present inventors have also realised that the use of alcohol, and particularly methanol, as the liquid component is desirable, as it is a hydrogen rich material (11) and a potential hydrogen transferring agent (12), for example due to thermal decomposition of the alcohol. This may reduce the formation of char, which may further reduce the problems associated with char agglomeration during pyrolysis.

As an alternative to the polar compounds discussed above, non-polar compounds are also suitable the liquid component. For example, hydrocarbons such as alkanes, alkenes or alkynes may be suitable. Preferred are $C_1$-$C_{15}$ hydrocarbons, such as $C_1$-$C_{15}$ alkanes or alkenes, more preferably $C_1$-$C_{15}$ alkanes. More preferred at are $C_1$-$C_{10}$ hydrocarbons, such as $C_1$-$C_{10}$ alkanes or alkenes, more preferably $C_1$-$C_{10}$ alkanes. Most preferred are $C_5$-$C_{15}$, or $C_5$-$C_{10}$, hydrocarbons, such as $C_5$-$C_{15}$, or $C_5$-$C_{10}$, alkanes or alkenes, more preferably $C_5$-$C_{15}$, or $C_5$-$C_{10}$, alkanes.

It may be preferred that the liquid component(s) are sourced from renewable sources. For example, the liquid component may be bio-ethanol, or a vegetable oil. Alternatively, bio-diesel (esterified vegetable oil)may be used. In this way, the pyrolysis products (e.g. phenolic compounds) may be derived from substantially or entirely renewable starting materials.

It will be understood that the paste may comprise a mixture of one or more liquid components, for example a mixture of one or more of the liquid components described above.

The process may further comprise the step, before the paste is fed into the reaction chamber, of mixing together lignin and one or more liquid components (for example, a liquid component as described above) in order to form the paste. For example, extracted lignin or lignin powder/granules may be mixed with one or more liquid components in order to from the paste.

Similarly, the apparatus may include a mixing chamber for mixing together lignin and one or more liquid components to form a paste for introduction into the reaction chamber. The feeding assembly of the apparatus may be arranged to convey the paste from the mixing chamber into the reaction chamber.

The reaction chamber may be at a pyrolysis temperature when the paste is fed into the chamber. For example, the temperature inside the reaction chamber may be at least 300°C, at least 400°C, or at least 500°C when the paste is fed into the chamber. Preferably, the temperature inside the reaction chamber is not more than 900°C, for example not more than 800°C, not more than 700°C, not more than 650°C or not more than 600°C when the paste is fed into the chamber.

During pyrolysis, the temperature inside the reaction chamber may be at least 300°C, at least 400°C, or at least 500°C. Preferably, the temperature inside the reaction chamber is not more than 900°C, for example not more than 800°C, not more than 700°C, not more than 650°C or not more than 600°C during pyrolysis.

The pyrolysis of lignin may be "fast" pyrolysis. For example, the residence time of hot vapour products of the pyrolysis in the reaction chamber may be less than a minute, for example less than 30s, 20s, 10s or 5s. Most preferably, the residence time of the hot vapour products may be less than 1s, or may be less than 2s.

The reaction chamber may be, for example, a fluidised bed reactor, or a fixed bed reactor. The present invention is particularly relevant to these types of pyrolysis reactors. This is because lignin can cause agglomeration of solid particles of a fluidised bed (e.g. silica particles) causing defluidization. Similarly, agglomeration of lignin and/or char can

cause pressure drop in fixed bed reactors. The present inventors have found that processes and apparatus according to the present invention can reduce these problems.

In embodiments employing a fluidised bed reactor, the bed may comprise silica sand, for example having a diameter in the range 150 to 300μm. Nitrogen may be employed as a fluidising gas. The fluidising gas may be heated before it enters the reaction chamber.

Alternatively, the reaction chamber may be a heated vessel.

A feeding assembly may be provided, for feeding the paste into the reaction chamber. For example, the feeding assembly may comprise a tube, channel or screw feeder. The paste may be extruded into the chamber via the feeding assembly. The paste may be extruded into the chamber due to pressure exerted on the paste in order to move it into the reactor. For example, the pressure may be provided by gas flow, for example nitrogen flow.

The feeding assembly may be made from an insulating material, to reduce heat transfer from the reaction chamber to the paste as it is fed into the chamber. For example, the feeding assembly may be made from PTFE. For example, it may be a PTFE tube.

A cooling system may be provided to the feeding assembly. For example, a water cooling system may be provided. In one embodiment, the feeding assembly may comprise a PTFE tube cooled by a water cooling system.

The process of the present invention may comprise feeding the paste into the reaction chamber at a position toward or at the base of the reaction chamber. This can reduce lignin and char build up in the interior of the reaction chamber, for example on the reaction chamber walls. For example, the process may comprise feeding the paste into the reaction chamber at a position in the lower half of the reaction chamber. In the case of a fluidised bed reactor, it is particularly preferred that the process comprises feeding the paste into the reaction chamber at a position below the level of the fluidised bed. In this way, the paste may be delivered directly into the fluidised bed. The feeding assembly may by arranged in order to deliver the paste to the reaction chamber at these preferred positions.

The problems caused by adhesion of lignin and/or char to components of the pyrolysis reactor, and by agglomeration of lignin, char and/or the solid phase of a fluidised bed may be further reduced by agitation during feeding and/or pyrolysis.

For example, an agitator may be provided to provide agitation in the interior of the reaction chamber. The agitator may be arranged to reduce build-up of deposits, for example deposits of lignin and/or char, on the walls of the reaction chamber and/or on the feeding assembly. In the case of a fluidised bed reactor, alternatively or in addition, the same or an additional agitator may be provided to agitate the fluidised bed. The agitator(s) may be, for example, a stirrer.

Similarly, the process of the present invention may comprise providing agitation to the interior of the reaction chamber during feeding and/or pyrolysis. Agitation may be provided to reduce the build-up of deposits, for example deposits of lignin and/or char, on the walls of the reaction chamber and/or on the feeding assembly. Alternatively or in addition, in the case of a fluidised bed reactor, the process may comprise agitating the fluidised bed.

As mentioned above, pyrolysis of lignin is of particular interest as it results in the production of useful phenolic products. In general, phenolic products are those including the moiety Ph-O-, wherein the phenyl group may be further substituted. In some cases, phenolic compounds may also include compounds including a benzeneacetaldehyde moiety. Monomeric phenolic compounds are those including only a single Ph-O- moiety, or only a single benzeneacetaldehyde moiety as the case may be.

Example phenolic compounds which may be produced from lignin hydrolysis include phenol, guaiacol, 2-methylphenol, 2-methoxy-4-methylphenol, 2,3-dimethylphenol, 4-ethyl-2-methoxyphenol, 2-methoxy-4-vinylphenol, 1,2-benzenediol, 2,6-dimethoxyphenol (syringol), 3-methyl-1,2-benzenediol, 3,4-dimethoxyphenol, 4-methyl-1,2-benzenediol, 2-methoxy-4-(1-propenyl)phenol, 1,2,3-trimethoxybenzene, vanillin, 5-methyl-1,2,3-trimethoxybenzene, 1-(4-hydroxy-3-methoxyphenol)ethanone, 1-(2-hydroxy-5-methoxy-4-methylphenol)ethanone, β-phenyl-benzeneacetaldehyde, 2,6-dimethoxy-4-(2-propenyl)phenol, 2,5-dimethoxy-4-ethylbenzaldehyde, 4-hydroxy-3,5-dimethoxybenzaldehyde, 3,4,5-trimethoxybenzaldehyde, 1-(2,4,6-trimethoxy-3-methylphenyl)-1-butanone, and (1,1'-biphenyl)-2,2'-dicarboxaldehyde.

One or more additives may be included in the process, for example to enhance production of preferred products. For example, the additives may be included to enhance the production of particularly preferred phenolic products. Additives may be added to the reaction chamber. For example, additives may be added to the paste. For example, the additives may be added when the lignin is mixed with the liquid component.

For example, one or more catalysts may be added to the paste, or to the reaction chamber, for example in the fluidised bed. Alternatively or in addition, a carbon dioxide absorber could be included. This may be used to tune the pyrolysis reaction by affecting the equilibrium.

The process of the present invention may comprise additional steps. For example, the process may comprise removing pyrolysis products from the reaction chamber. For example, hot vapour products may be removed from the reaction chamber. Particulate products may be present in the thus removed vapour. These may be removed by any suitable method, for example using an electrostatic precipitator and/or a cyclone. The process may comprise additional cooling, condensation, separation and/or purification steps, for obtaining the products of pyrolysis, such as phenolic

compounds.

Similarly, the apparatus of the present invention may comprise a removal port for removing components from the reaction chamber. It may comprise one or more components for removing particulate from gaseous, vapour and/or liquid pyrolysis products, such as an electrostatic precipitator and/or a cyclone. Additionally, it may comprise one or more cooling assemblies, condensation assemblies and/or separation assemblies for further processing, separating and/or purifying the pyrolysis products.

Any of the preferred or optional features of any aspect may be combined, either singly or in combination, or with any other aspect, unless context demand otherwise.

## BRIEF DESCRIPTION OF THE DRAWINGS

Preferred embodiments of the invention will now be described, by way of example, with reference to the accompanying drawings in which:

**Fig. 1** shows apparatus for conducting pyrolysis of lignin according to an embodiment of the invention.

**Fig. 2** shows the molecular mass of oil collected in the first oil pot in the pyrolysis processes carried out in the Examples at various pyrolysis temperatures. Mn is number average molecular mass, and Mw is weight average molecular mass.

## DETAILED DESCRIPTION OF THE PREFERRED EMBODIMENTS AND FURTHER OPTIONAL FEATURES OF THE INVENTION

Fig. 1 shows pyrolysis apparatus according to an embodiment of the invention. The apparatus includes a furnace 1, containing a fluid bed reaction chamber 2, a cyclone 3 and a char pot 4. The cyclone and the char pot are provided for removing and collecting solid particles from the gasses leaving the reaction chamber 2. The gasses leave the reaction chamber 2 via a removal port 5.

Nitrogen fluidising gas is provided to the fluid bed reaction chamber 2 from a nitrogen cylinder 6.

The apparatus comprises a lignin paste feeder 7, located above the reaction chamber 2. This is connected to the reaction chamber 2 by a PTFE tube 8. The PTFE tube is held within a vertical tube passing into the reaction chamber 2 and provided with a water cooling jacket 9 ($\Phi$9.5x 50mm). "CW" indicates the input of cold water, and "RW" indicates the output of water from the water cooling jacket 9.

The lignin paste feeder 7 is provided with a nitrogen gas source 10 to urge paste through the PTFE tube 8 into the reaction chamber 2.

The reaction chamber 2 is additionally provided with a stirrer 11 having several plate-shaped blade layers. The stirrer 11 is installed from the top of the vertical tube into the reaction chamber. It is operable to break lignin char agglomerate in the reaction chamber during the pyrolysis process.

As mentioned above, the reaction chamber 2 is connected to a cyclone 3 and char pot 4, via a removal port 5. The char pot 4 is located underneath the cyclone 3 for collecting solid particles, e.g. char particles, from the gasses in the cyclone 3. The cyclone 3 is connected, in sequence, to a water condenser 12, an electrostatic precipitator 13, two serial dry ice condensers 14 and 15 and a cotton filter 16. Oil pots 17, 18 and 19 are connected to each of the dry ice condensers 14 and 15, and to the electrostatic precipitator 13, for collecting condensate.

In the water condenser 12, "CW" indicates the input of cold water, and "RW" indicates the output of water. The electrostatic precipitator 13 is connected to a voltage multiplier 21.

A meter 20 is provided for metering the non-condensable gasses. The non-condensable gasses are then directed to a venting system. The venting system includes a gas chromatography apparatus.

In an example process according to the present invention, the reaction chamber 2 is heated to a pyrolysis temperature and the bed is fluidised with heated nitrogen. The lignin paste is fed into the heated reaction chamber 2 by connecting the lignin paste feeder 7 to a pressurised nitrogen line. The lignin paste is extruded into the reaction chamber 2 as a thread. Pyrolysis gasses leave the chamber via the removal port 5 and pass into the cyclone 3 where solid particulate is collected in the char pot 4. The gasses then enter, in sequence, the water condenser 12, the electrostatic precipitator 13, the two serial dry ice condensers 14 and 15 and the cotton filter 16. Condensate is collected in the oil pots 17, 18 and 19.

## Examples

### Materials

The Alcell lignin used in this work was supplied by Energy Research Centre of Netherlands (ECN). The ash content of the lignin was derived by ashing at 575°C for 3 hours (ASTM E1534-93). The moisture content of the lignin was analysed using a moisture analyser (Sartorius MA35), in which a sample of about 1 g was placed in an aluminium pan and then dried at 105°C to a constant weight. The reported data for ash and moisture content was the average of three measurements. The volatiles and fixed carbon was determined using a PerkinElmer Pyris 1 Thermogravimetric analyser (TGA). The sample was heated from 105°C to 950°C at a heating rate of 10°C/min under a nitrogen atmosphere. The final weight after correction for ash and moisture content was the fixed carbon. The volatiles were calculated on a dry ash free basis as the difference between fixed carbon and original weight.

The carbon, hydrogen and nitrogen contents in the sample were analysed by Medac Ltd (Surrey, UK) by duplicate analysis. The oxygen content was determined by difference. The analytical results are given in Table 1.

**Table 1.** Proximate and elemental analysis of Alcell lignin

| | |
|---|---|
| Proximate analysis (wt% daf) | |
| Moisture | 2.23 |
| Ash | 0.18 |
| Fixed carbon | 34.31 |
| Volatiles | 65.69 |
| Pyrolysis temperature (°C) | 396.1 |
| CHNO analysis (wt% daf) | |
| Carbon | 66.52 |
| Hydrogen | 5.94 |
| Nitrogen | <0.10 |
| Oxygen | 27.54 |

### Pyrolysis procedure

All pyrolysis experiments were conducted in a 100 g/h fluid bed fast pyrolysis reactor. The fluid bed reactor had an internal diameter of 41 mm and a length of 250 mm, which was placed in a furnace for heating it up. Nitrogen was used as the fluidising gas on a once through basis. The volume flow rate of the nitrogen was kept at 4 L/min (20°C), which gave a good bubbling fluid bed. Silica sand with a diameter of 150-300 μm was used as the bed material. A flow diagram of the processing system is shown in Fig.1, which is described above. Nitrogen was metered from a cylinder to the reactor as the fluidising gas. The fluidising gas was pre-heated in the furnace before entering the bottom of the reactor. The temperatures of the reactor were measured using K-type thermocouples, which were installed on the wall of the freeboard and the lower wall of the reactor at a position lower than the height of the static bed. The pyrolysis temperature was reported as the average of the two temperatures.

The Alcell lignin was fed in the form of paste. The lignin powder was mixed with methanol at a mass ratio of 2:1 in a glass beaker. The mixture was then stirred using a glass rod for 2 minutes to form a paste. Since methanol can dissolve lignin fraction with low molecular mass, the paste was very viscous at this ratio. The lignin paste was then transferred into a stainless steel cylindrical vessel with an upside conical bottom, which was connected with a flexible PTFE tube with an inner diameter of 0.5 mm and a wall thickness of 1.0 mm. The weight of the transferred lignin was calculated by the weight difference of the vessel (including the connected PTFE tubing) before and after the transferring. Due to the high viscosity and the short duration of the transferring process, the ratio of lignin to methanol in the vessel was considered the same as that in the glass beaker.

The vessel containing the lignin paste was placed above the reactor. The PTFE tubing was then inserted into the vertical tube with a cooling water jacket (Φ9.5x 50mm), which was connected to the cap of the reactor. The PTFE tubing reached the lower end of the vertical tube to avoid the high temperature of the reactor. A stirrer with several layers of plate-shape blade was installed from the top of the vertical cooling tube into the reactor to break lignin char agglomerate in the reactor during the pyrolysis process.

When the fluid bed reached the pyrolysis temperature, feeding was started by connecting the lignin feeder to 3 bar nitrogen line to compress the lignin paste into the fluid bed reactor via the PTFE tubing. The lignin paste was

extruded from the feeder in a form of thread. The pyrolysis vapour left the reactor to a cyclone where most of the entrained solids were separated and collected in a char pot under the cyclone. The char pot and cyclone were also contained in the furnace. The gases then entered in sequence a water condenser, an electrostatic precipitator (ESP), two serial dry ice condensers and a cotton filter. The condensate was collected in three oil pots. The condensates were collected from the ESP and the two dry ice condensers. The non-condensable gases were metered and then entered the venting system. The condensate trapped in the cotton filter was very small, less than 1% of the total condensates.

A part of the non-condensable gases after being metered went to a Micro-GC (Varian CP 4900) with a thermal conductivity detector to measure its volumetric composition. Hydrogen, methane and CO were separated using a column packed with molecular sieve 13X, while $CO_2$ and $C_2$-$C_4$ hydrocarbons were separated using a column packed with Porapak QS with a thermal conductivity detector.

Since each unit, as well as the connecting lines of the pyrolysis system, could be disassembled, a complete mass balance was obtained by weighing before and after the experiment. The yield of liquid product was the sum of mass differences of the three oil pots, the water condenser, the ESP, the two dry ice condensers and the cotton filter, after the solids contained in water condenser, ESP and the first oil pot was subtracted. The yield of char was the sum of the mass differences of the reactor, the cyclone, the char pot and the solids in the water condenser, the ESP and the first oil pot, which were determined as follows. The water condenser and the ESP were washed using acetone until the liquid become clear. The acetone solution was then filtered using filter paper with a pore size of 1μm, and the solids on the filter paper was rinsed with fresh acetone several times until the acetone passing through the filter become clear. The filter paper together with solids on it was dried in a fume-hood and then dried in a 60°C oven overnight. The mass of the solids in the ESP and water condenser was then determined by the difference of the filter paper and filter paper plus dried solids. The solid content in the first oil pot was determined similarly as above by using about 1 g sample taken from the oil.

The water content of the three condensates in the three oil pots was analysed using Karl-Fischer titration. The methanol content of the three condensates was determined by GC-FID, as described in the analytical section. The chemical species in the oil was then quantitatively analysed by GC-MS-FID as shown in the analytical section.

The total mass of the permanent gases produced by pyrolysis of the feedstock was calculated according to Eq. (1)

$$m = \sum_{i=1}^{n} \frac{pV_i M_i}{RT} \qquad (1)$$

where p is the atmospheric pressure, which was taken as 101325 Pa; Vi is the volume of gas i, which can be calculated by the volume concentration multiplied by the total volume of the gas obtained from the gas meter; $M_i$ is the molar mass of gas i; R is the Universal gas constant, which is 8.314 J $mol^{-1}$ $K^{-1}$; and T is the temperature of the gas before entering the gas meter in Kelvin.

The maximum residence time of gases and vapours was calculated as the free volume of the reactor divided by the inlet gas volumetric flow rate expressed at the reactor conditions, which was about 1 second in this work.

**Analysis**

The light oil was analysed using GC-MS-FID. A Perkin-Elmer AutoSystem XL Gas Chromatograph fitted with a DB 1701 column (60 m x 25 μm with 0.25 μm film thickness) was used to separate the pyrolysis oil. At the end of the GC column, a splitter was fitted, which split the sample gas into two streams, one to MS detector and one to FID detector. The carrier gas was helium with a flow rate of 2 ml $min^{-1}$. The injection volume was 1 μL with a split ratio of 1:24. The oven program held temperature at 45°C for 5 minutes then heated to 250°C at a rate of 5°C $min^{-1}$. The oven was held at the upper temperature for 5 minutes.

The compounds in the oil were identified by the retention time of the standards and MS library. The MS was a Perkin Elmer Turbomass GOLD mass spectrometer. The detector temperatures were set at 280°C. Electron impact mass spectra were obtained at 70 eV. The mass range scanned from m/z 35 to 400 was. Data processing was performed using NIST-98 Mass Spectral library. The quantitative determination of the compounds in the oil was determined by GC-FID, which was calibrated using standard compounds. The FID detector was maintained at 250°C. The hydrogen flow rate was set at 45.0 ml/min and the air was set at 450 ml/min.

The following compounds were calibrated using standard compounds: phenol, catechol, eugenol, 2-methoxy-4-methylphenol, guaiacol, 1,2,3-trimethoxybenzene, syringaldehyde, 3-methylcatechol, acenaphthene, furfuryl alcohol, 2-methyoxy-4-vinylphenol, 2-furfuraldehyde (fufural), vanillin, 3,4-dimethoxyphenol, 1,6-anhydro-b-D-glucose, toluene, methanol, acetic acid. The response factors of these compounds were then calculated. The response factors of other compounds were calculated according to the relationship between their effective carbon numbers to the response of flame ionisation detector (FID) (13-16).

The molecular mass of the oil in the first oil pot was analysed using PolymerLabs GPC PL50 with a refractive index detector. The mobile phase used was tetrahydrofuran with a flow rate of 1.0 mL/min. The column was mixed D calibrated against polystyrene narrow standards. The oven temperature was set at 40°C.

**Results and Discussion**

Feeding and char agglomeration

In the first few trial experiments, it was recognized that lignin could be fed smoothly into a fluid bed reactor in a form of paste. A stirrer in the freeboard was used to break any agglomerates forming during running. The running could last as long as 70g lignin paste was fed (the maximum mass that the vessel could hold). No blockage was formed during feeding, but some char stuck to the wall of the reactor freeboard. Most of the broken char was not elutriated from the reactor because of the large size. After pyrolysis, char and sand were poured out of the reactor. The broken char agglomerates by the stirrer could clearly be seen clearly in the sand. There were also fine char particles.

Five runs were conducted at a temperature range between 400 and 800°C. The product distributions of the five runs are given in Table 2, and the main components in the pyrolysis oils are given in Table 3. The yield of the gaseous products increased rapidly from 17.55 % at 480°C to 45.55% at 780°C. The gas was mainly composed of CO, $CO_2$ and $CH_4$. All of the gas components increased rapidly with an increase in pyrolysis temperature. It should be noted that $H_2$ accounted 0.1 wt% of the gas at 480°C, and this value increased to 0.3 wt%. Hydrogen was not reported in previous reports of lignin pyrolysis. It is therefore believed to originate from thermal decomposition of methanol, which produces CO and hydrogen (17, 18). The presence of hydrogen generated from the thermal decomposition of methanol was probably the reason for the production of aromatic hydrocarbons, which account for 0.2% at 680°C, as shown in Table 2.

The yield of char reached a maximum of 37.7% of the total feed at 555°C. With an increase in temperature, the yield of char decreased to 22.3%. This may be due to the gasification of the char at higher temperatures in the presence of methanol. In the liquid product, there were three parts: water, methanol and organics. The yield of water was around 7 wt% without significant variations with the temperature. This is in agreement with the literature reports (4, 5, 19). The consumption of methanol increased with pyrolysis temperature. From the product distribution in Table 2 and the compounds in the liquid product shown in Table 3, it can be seen that methanol may have been consumed in two ways. First, it is believed that methanol was decomposed into CO and hydrogen. Secondly, it is believed that methanol reacted with acids and ketones from lignin pyrolysis to form esters (4.88 min) and acetals (5.52 min).

The organic part of the lignin pyrolysis includes aromatic hydrocarbons, monomeric phenolics, pyrolytic lignin and non-aromatic compounds such as acetic acid, formic acid esters. The aromatic hydrocarbons produced in the pyrolysis include benzene (6.96 min), toluene (10.14 min) and indene (20.89 min). The mechanism for the formation of aromatic hydrocarbons is most probably due to the hydrogenation of the phenolic compounds.

(The term pyrolytic lignin will be well understood by the skilled person. It relates to lignin fragments which have not been fully broken down into monomers in the pyrolysis process. It may have an average molecular weight in the region of 2500.)

The pyrolytic lignin increased steadily from 480°C to 632°C and decreased slowly. The change in the pyrolytic lignin concentration was reflected in the change in molecular mass of the liquid in the first oil pot, as shown in Fig. 2. At lower temperatures, the thermal energy is not enough to break down carbon-carbon linkages, leading to more large fragments. At higher temperatures, the thermal energy is enough to break down the carbon-carbon linkages, leading to small fragments. However, the total liquid is also reduced due to the gasification reaction. The two effects together resulted in lower yields of pyrolytic lignin at higher temperatures (20).

The monomeric phenolics reached the maximum at 555°C and decreased rapidly with pyrolysis temperature, but the aromatic hydrocarbons increased rapidly with pyrolysis temperature. This indicates that monomeric phenolics underwent hydrodeoxygenation reactions with the hydrogen from the thermal decomposition of methanol. The main phenolic compounds are 2-methoxy-4-vinylphenol (30.82 min), 1,2,3-trimethoxybenzene (34.48 min), β-phenyl-benzeneacetaldehyde (37.93 min), 2,5-dimethoxy-4-methylbenzaldehyde (40.37 min), 4-hydroxy-3,5-dimethoxybenzaldehyde (41.11 min). These compounds have also been reported as the main monomeric phenolics in the microscale pyrolysis (4, 5, 19) and fluid bed reactors (7, 8, 9). The structures of the compounds are shown below. They are characteristic monolignols.

| 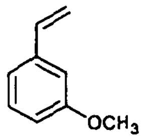 | 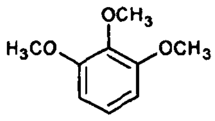 | 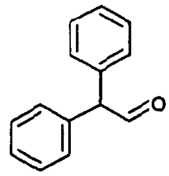 | 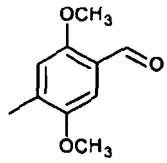 | 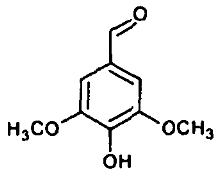 |
|---|---|---|---|---|
| 30.82 min | 34.48 min | 37.79 min | 40.37 min | 41.11 min |

The maximum yield of phenolic compounds can be achieved at 550-630°C. At this temperature, the yield of phenolic compounds can be up to 26.7 wt% of lignin, in which monomeric phenolics account for 17.9% of the total phenolics (calculated from Table 2).

**Table 2.** Fast pyrolysis yields from Alcell lignin paste as a function of pyrolysis temperature (wt% mf feed)

| Temperature | 480 | 555 | 632 | 682 | 780 |
|---|---|---|---|---|---|
| Paste fed (g) | 59.33 | 68.60 | 49.77 | 46.35 | 42.68 |
| *Methanol (wt% ofpaste)* | *33.3* | *33.3* | *33.3* | *33.3* | *33.3* |
| | | | | | |
| *Gas* | *17.6* | *16.4* | *17.5* | *26.6* | *45.6* |
| *Char* | *27.7* | 37.7 | 26.5 | *29.1* | *22.3* |
| *Water* | 9.9 | *6.6* | *10.1* | *5.9* | *6.4* |
| *Methanol* | *19.8* | *15.2* | *20.1* | *15.6* | *12. 5* |
| *Organics* | *16.4* | *18.3* | *18.3* | *12.8* | *8.4* |
| *Mass balance* | *91.3* | *94.1* | *92.5* | *90.0* | *95.2* |
| | | | | | |
| $H_2$ | 0.06 | 0.14 | 0.33 | 0.31 | 0.33 |
| CO | 5.59 | 6.75 | 6.32 | 12.49 | 20.68 |
| $CO_2$ | 8.07 | 5.64 | 6.49 | 5.19 | 10.64 |
| $CH_4$ | 2.92 | 3.06 | 2.80 | 3.81 | 8.35 |
| $C_2$-$C_4$ hydrocarbons | 0.91 | 0.85 | 1.56 | 4.79 | 5.50 |
| | | | | | |
| Aromatic hydrocarbons | 0.01 | 0.01 | 0.04 | 0.22 | 0.21 |
| Monomeric phenolics* | 3.1 | 3.2 | 1.2 | 0.6 | 0.2 |
| Pyrolytic lignin** | 10.8 | 14.6 | 15.1 | 9.1 | 7.5 |

* The value was the sum of all the phenolic compounds that was GC detectable.
** The value was obtained by the subtraction of water, methanol, GC detectable from total liquid yield.

**Table 3.** Compounds of the pyrolysis oil determined by GC-MS-FID at different temperatures (mass % of whole liquid)

| Compound name | RT (min) | Temperature (°C) | | | | |
|---|---|---|---|---|---|---|
| | | 479 | 555 | 632 | 682 | 780 |
| **formic acid, 1-methylethylester** | **4.79** | **0.087** | **0.453** | **0.362** | **0.412** | **1.368** |
| acetic acid, methylester | 4.88 | 0.000 | 0.085 | 0.088 | 0.153 | 0.208 |
| ethane, 1,1-dimethoxy- | 5.52 | 0.069 | 0.157 | 0.176 | 0.328 | 0.433 |
| benzene | 6.96 | 0.010 | 0.014 | 0.019 | 0.138 | 0.147 |
| acetic acid | 8.84 | 0.974 | 0.801 | 0.576 | 0.659 | 0.490 |
| toluene | 10.14 | 0.006 | 0.008 | 0.013 | 0.107 | 0.098 |
| furfural | 15.80 | 0.021 | 0.386 | 0.298 | 0.293 | 0.137 |
| indene | 20.89 | 0.000 | 0.000 | 0.021 | 0.092 | 0.118 |

(continued)

| Compound name | RT (min) | Temperature (°C) | | | | |
|---|---|---|---|---|---|---|
| | | 479 | 555 | 632 | 682 | 780 |
| phenol | 23.53 | 0.136 | 0.145 | 0.119 | 0.298 | 0.346 |
| guaiacol | 24.10 | 0.648 | 0.504 | 0.201 | 0.000 | 0.000 |
| 2-methylphenol | 24.93 | 0.039 | 0.059 | 0.073 | 0.183 | 0.138 |
| 2-methoxy-4-methylphenol | 27.05 | 0.777 | 0.627 | 0.227 | 0.071 | 0.016 |
| 2,3-dimethylphenol | 27.26 | 0.034 | 0.056 | 0.083 | 0.152 | 0.127 |
| 4-ethyl-2-methoxyphenol | 29.31 | 0.250 | 0.213 | 0.095 | 0.000 | 0.000 |
| **2-methoxy-4-vinylphenol** | **30.82** | **1.350** | **1.245** | **0.498** | **0.111** | **0.000** |
| 1,2-benzenediol | 31.99 | 0.198 | 0.287 | 0.392 | 0.750 | 0.523 |
| **2,6-dimethoxyphenol (syringol)** | **32.23** | **1.647** | **1.200** | **0.456** | **0.132** | **0.034** |
| **3-methyl-1,2-benzenediol** | 32.91 | 0.041 | 0.133 | 0.162 | 0.279 | 0.148 |
| 3,4-dimethoxyphenol | 33.14 | 0.212 | 0.285 | 0.178 | 0.000 | 0.000 |
| 4-methyl-1,2-benzenediol | 33.90 | 0.000 | 0.118 | 0.241 | 0.414 | 0.275 |
| 2-methoxy-4-(1-propenyl)phenol | 34.13 | 0.552 | 0.475 | 0.136 | 0.049 | 0.000 |
| **1,2,3-trimethoxybenzene** | **34.48** | **1.564** | **1.164** | **0.379** | **0.077** | **0.000** |
| vanillin | 34.78 | 0.284 | 0.272 | 0.248 | 0.219 | 0.000 |
| 5-methyl-1,2,3-trimethoxybenzene | 36.18 | 0.501 | 0.335 | 0.134 | 0.041 | 0.000 |
| 1-(4-hydroxy-3-methoxyphenol)ethanone | 36.67 | 0.271 | 0.241 | 0.076 | 0.000 | 0.000 |
| 1-(2-hydroxy-5-methoxy-4-methylphenol)ethanone | 37.51 | 0.975 | 0.831 | 0.151 | 0.000 | 0.000 |
| **β-phenyl-benzeneacetaldehyde** | **37.93** | **1.089** | **0.838** | **0.364** | **0.000** | **0.000** |
| 2,6-dimethoxy-4-(2-propenyl)phenol | 39.05 | 0.386 | 0.364 | 0.114 | 0.000 | 0.000 |
| **2,5-dimethoxy-4-ethylbenzaldehyde** | **40.37** | **1.533** | **1.321** | **0.253** | **0.122** | **0.000** |
| **4-hydroxy-3,5-dimethoxybenzaldehyde** | 41.11 | **1.358** | **1.111** | **0.376** | **0.144** | **0.000** |
| 3,4,5-trimethoxybenzaldehyde | 42.51 | 0.615 | 0.512 | 0.187 | 0.080 | 0.000 |
| 1-(2,4,6-trimethoxy-3-methylphenyl)-1-butanone | 43.41 | 0.517 | 0.389 | 0.000 | 0.000 | 0.000 |
| (1,1'-biphenyl)-2,2'-dicarboxaldehyde | 44.02 | 0.265 | 0.236 | 0.000 | 0.000 | 0.000 |
| **Sum** | | **16.409** | **14.865** | **6.696** | **5.304** | **4.606** |

Shown in Table 4 below is a comparison with previous reports using fluid bed reactor (7,9). Generally, the present work agrees well with the literature reports for the temperature at which maximum liquid can be obtained, which is around 600°C. In this work, the yield of phenolics (pyrolytic lignin and monomeric phenolics) was higher than that Kaminsky et al (7) reported. However, the yield of monomeric phenolics was lower than that in Kaminsky's work for ethanol lignins but at similar level for Kraft lignins. This may be due to the difference in the molecular structures of the lignins. The yield of phenolics is much higher than that in de Wild et al's work (9), since they conducted the pyrolysis of Alcell lignin at only 400°C.

**Table 4.** A comparison of this work with literature reports using fluid bed reactor

| Authors | Feedstock | Temperature range studied (°C) | Temperature for max liquid yield (°C) | Organics (% lignin) | Phenolics (% lignin) | Monomeric phenolics (% lignin) |
|---|---|---|---|---|---|---|
| Kaminsky et al (7) | Ethanol lignin (beech) | 450-850 | 600 | - | 21.5 | 14.1 |
| | Ethanol lignin (spruce) | 450-850 | 600 | - | 24.7 | 9.7 |
| | Kraft lignin (beech) | 450-850 | 500 | - | 12.0 | 3.4 |
| | Kraft lignin (spruce) | 450-850 | 500 | - | 14.9 | 5.4 |
| de Wild et al (9) | Alcell lignin (mixed hardwood) | 400 | 400 | 13.0 | | |
| | Granit lignin (mixed grass) | 400 | 400 | 21.0 | | |
| This work | Alcell lignin (mixed hardwood) | 450-800 | 550-630 | 27.7 | 26.7 | 4.8 |

The preferred embodiments have been described by way of example only. Modifications to these embodiments, further embodiments and modifications thereof will be apparent to the skilled person and as such are within the scope of the present invention.

**REFERENCES**

1. Freudenberg K. Science 1965;148:595-600.

2. Sun Y and Cheng J. Bioresource Technology 2002;83:1-11.

3. Meier D, Berns J, Faix O, Balfanz U, and Baldauf W. Biomass and Bioenergy 1994;7:99-105.

4. Iatridis B and Gavalas GR. Industrial and Engineering Chemistry Process Design and Development 1979;18:127-130.

5. Jegers HE and Klein MT. Industrial and Engineering Chemistry Process Design and Development 1985;24:173-183.

6. Ferdous D, Dalai AK, Bej SK, and Thring RW. Energy and Fuels 2002;16:1405-1412.

7. Kaminsky W, Schweers W, and Schwesinger H. Holzforschung 1980;34:73-76.

8. Nowakowski DJ, Bridgwater AV, Elliott DC, Meier D, and de Wild P. Journal of Analytial and Applied Pyrolysis 2010;88:53-72.

9. de Wild P, van der Laan R, Kloekhorst A, and Heeres E. Environmental Progress & Sustainable Energy 2009;28:461-469.

10. A. V. Bridgwater, D. Meier and D. Radlein, "An overview of fast pyrolysis of biomass" Organic Geochemistry Vol. 30, Issue 12, December 1999, pages 1479-1493.

11. Horne PA, Nugranad N, and Williams PT. Journal of Analytical and Applied Pyrolysis 1995;34:87-108.

12. Macala GS, Matson TD, Johnson CL, Lewis RS, Iretskii AV, and Ford PC. Chemsuschem 2009;2(3):215-217.

13. Scanlon JT and Willis DE. Journal of Chromatographic Science 1985;23:333-340.

14. Tong HY and Karasek FW. Analytical Chemistry 1984;56:2124-2128.

15. Jorgensen AD. Analytical Chemistry 1990;62:683-689.

16. Thring RW and Chornet E. Journal of Chromatographic A 1989;467:441-446.

17. Ouchi K, Ozaki Y, Daigo A, Itoh H, and Makabe M. Fuel 1987;66:731-734.

18. Cho J and Choi C. Journal of Physical Chemistry 2008;112:6907-6913.

19. Caballero JA, Font R, and Marcilla A. Journal of Analytial and Applied Pyrolysis 1996;36:159-178.

20. Benigni JD and Goldstein IS. Journal of Polymer Science: Part C 1971;36:467-475.

21. Jiang G, Nowakowski DJ, Bridgwater AV, "Effect of the Temperature on the Composition of Lignin Pyrolysis Products", Energy Fuels, 2010, 24 (8), pp 4470-4475

22. Bridgwater AV, "Review of fast pyrolysis of biomass and product upgrading", Biomass and Bioenergy, (2011) 1-27

## Claims

**1.** A process for the pyrolysis of lignin comprising the steps:

(a) feeding lignin into a reaction chamber; and
(b) performing pyrolysis on the lignin in the reaction chamber,

**characterised in that** the lignin is suspended in a liquid component to form a paste.

**2.** A process according to claim 1 wherein a portion of the lignin is dissolved in the liquid component and a portion of the lignin is suspended in the liquid component.

**3.** A process according to claim 1 or 2 wherein the mass ratio of lignin to the liquid component is from 1:5 to 10:1.

**4.** A process according to any one of the preceding claims wherein the liquid component is a polar solvent.

**5.** A process according to any one of the preceding claims wherein the liquid component is an alcohol.

**6.** A process according to claim 5 wherein the liquid component is methanol.

**7.** A process according to any one of claims 1 to 3 wherein the liquid component is a non-polar compound.

**8.** A process according to any one of the preceding claims wherein the temperature inside the reaction chamber is at least 300°C when the lignin paste is fed into the chamber.

**9.** A process according to any one of the preceding claims comprising feeding the lignin paste into the reaction chamber at a position toward or at the base of the reaction chamber.

**10.** Apparatus for the pyrolysis of lignin, comprising

a pyrolysis reaction chamber (2); and
a feeding assembly (7) adapted to supply a paste comprising lignin suspended in a liquid component into the

reaction chamber (2).

**11.** Apparatus according to claim 10 further comprising a lignin paste supply.

**12.** Apparatus according to claim 10 or claim 11 wherein the feeding assembly is provided with a cooling system (9).

**13.** Apparatus according to any one of claims 10 to 12 wherein the feeding assembly (7) is arranged to deliver lignin paste to the reaction chamber (2) at a position toward or at the base of the reaction chamber (2).

**14.** Apparatus according to any one of claims 10 to 13 further comprising an agitator (11) arranged to provide agitation in the interior of the reaction chamber (2).

**15.** A process or apparatus according to any one of the preceding claims wherein the reaction chamber (2) is a fluidised bed reaction chamber, a fixed bed reaction chamber or a heated vessel.

**Patentansprüche**

**1.** Verfahren zur Pyrolyse von Lignin, das die folgenden Schritte umfasst:

(a) das Einführen von Lignin in eine Reaktionskammer; und
(b) das Durchführen von Pyrolyse an dem Lignin in der Reaktionskammer,

**dadurch gekennzeichnet, dass** das Lignin in einer flüssigen Komponente suspendiert wird, um eine Paste zu bilden.

**2.** Verfahren nach Anspruch 1, worin ein Teil des Lignins in der flüssigen Komponente gelöst wird und ein Teil des Lignins in der flüssigen Komponente suspendiert wird.

**3.** Verfahren nach Anspruch 1 oder 2, worin das Masseverhältnis zwischen Lignin und der flüssigen Komponente 1:5 bis 10:1 beträgt.

**4.** Verfahren nach einem der vorangegangenen Ansprüche, worin die flüssige Komponente ein polares Lösungsmittel ist.

**5.** Verfahren nach einem der vorangegangenen Ansprüche, worin die flüssige Komponente ein Alkohol ist.

**6.** Verfahren nach Anspruch 5, worin die flüssige Komponente Methanol ist.

**7.** Verfahren nach einem der Ansprüche 1 bis 3, worin die flüssige Komponente eine nicht polare Verbindung ist.

**8.** Verfahren nach einem der vorangegangenen Ansprüche, worin die Temperatur innerhalb der Reaktionskammer zumindest 300 °C beträgt, wenn die Ligninpaste in die Kammer eingespeist wird.

**9.** Verfahren nach einem der vorangegangenen Ansprüche, das das Zuführen der Ligninpaste in die Reaktionskammer an einer Position in Richtung oder an der Basis der Reaktionskammer umfasst.

**10.** Vorrichtung zur Pyrolyse von Lignin, die Folgendes umfasst:

eine Pyrolysereaktionskammer (2); und
eine Zufuhranordnung (7), die so angepasst ist, dass sie eine Paste, die Lignin in einer flüssigen Komponente suspendiert umfasst, in die Reaktionskammer (2) einspeist.

**11.** Vorrichtung nach Anspruch 10, die des Weiteren eine Ligninpastenversorgung umfasst.

**12.** Vorrichtung nach Anspruch 10 oder Anspruch 11, worin die Zufuhranordnung mit einem Kühlsystem (9) ausgestattet ist.

**13.** Vorrichtung nach einem der Ansprüche 10 bis 12, worin die Zufuhranordnung (7) so angeordnet ist, dass sie die

Ligninpaste in die Reaktionskammer (2) an einer Position in Richtung oder an der Basis der Reaktionskammer (2) befördert.

**14.** Vorrichtung nach einem der Ansprüche 10 bis 13, die des Weiteren ein Rührwerk (11) umfasst, das so angeordnet ist, dass es im Inneren der Reaktionskammer (2) Bewegung erzeugt.

**15.** Verfahren oder Vorrichtung nach einem der vorangegangenen Ansprüche, worin die Reaktionskammer (2) eine Wirbelschicht-Reaktionskammer, eine Festbett-Reaktionskammer oder ein erhitztes Gefäß ist.

## Revendications

**1.** Procédé de pyrolyse de la lignine comprenant les étapes consistant à :

(a) introduire la lignine dans une chambre de réaction ; et
(b) réaliser une pyrolyse sur la lignine dans la chambre de réaction,

**caractérisé en ce que** la lignine est mise en suspension dans un composant liquide pour former une pâte.

**2.** Procédé selon la revendication 1 dans lequel une partie de la lignine est dissoute dans le composant liquide et une partie de la lignine est mise en suspension dans le composant liquide.

**3.** Procédé selon la revendication 1 ou 2 dans lequel le rapport massique de la lignine au composant liquide est de 1/5 à 10/1.

**4.** Procédé selon l'une quelconque des revendications précédentes dans lequel le composant liquide est un solvant polaire.

**5.** Procédé selon l'une quelconque des revendications précédentes dans lequel le composant liquide est un alcool.

**6.** Procédé selon la revendication 5 dans lequel le composant liquide est le méthanol.

**7.** Procédé selon l'une quelconque des revendications 1 à 3 dans lequel le composant liquide est un composé non polaire.

**8.** Procédé selon l'une quelconque des revendications précédentes dans lequel la température à l'intérieur de la chambre de réaction est d'au moins 300 °C lorsque la pâte de lignine est introduite dans la chambre.

**9.** Procédé selon l'une quelconque des revendications précédentes comprenant l'introduction de la pâte de lignine dans la chambre de réaction dans une position vers la chambre de réaction ou à la base de celle-ci.

**10.** Appareil pour la pyrolyse de la lignine, comprenant
une chambre de réaction de pyrolyse (2) ; et
un assemblage d'introduction (7) adapté pour fournir une pâte comprenant de la lignine en suspension dans un composant liquide dans la chambre de réaction (2).

**11.** Appareil selon la revendication 10 comprenant en outre une alimentation de pâte de lignine.

**12.** Appareil selon la revendication 10 ou la revendication 11 dans lequel l'assemblage d'introduction est doté d'un système de refroidissement (9).

**13.** Appareil selon l'une quelconque des revendications 10 à 12 dans lequel l'assemblage d'introduction (7) est conçu pour délivrer de la pâte de lignine dans la chambre de réaction (2) dans une position vers la chambre de réaction (2) ou à la base de celle-ci.

**14.** Appareil selon l'une quelconque des revendications 10 à 13 comprenant en outre un agitateur (11) conçu pour fournir une agitation à l'intérieur de la chambre de réaction (2).

15. Procédé ou appareil selon l'une quelconque des revendications précédentes dans lequel la chambre de réaction (2) est une chambre de réaction à lit fluidisé, une chambre de réaction à lit fixe ou un réservoir chauffé.

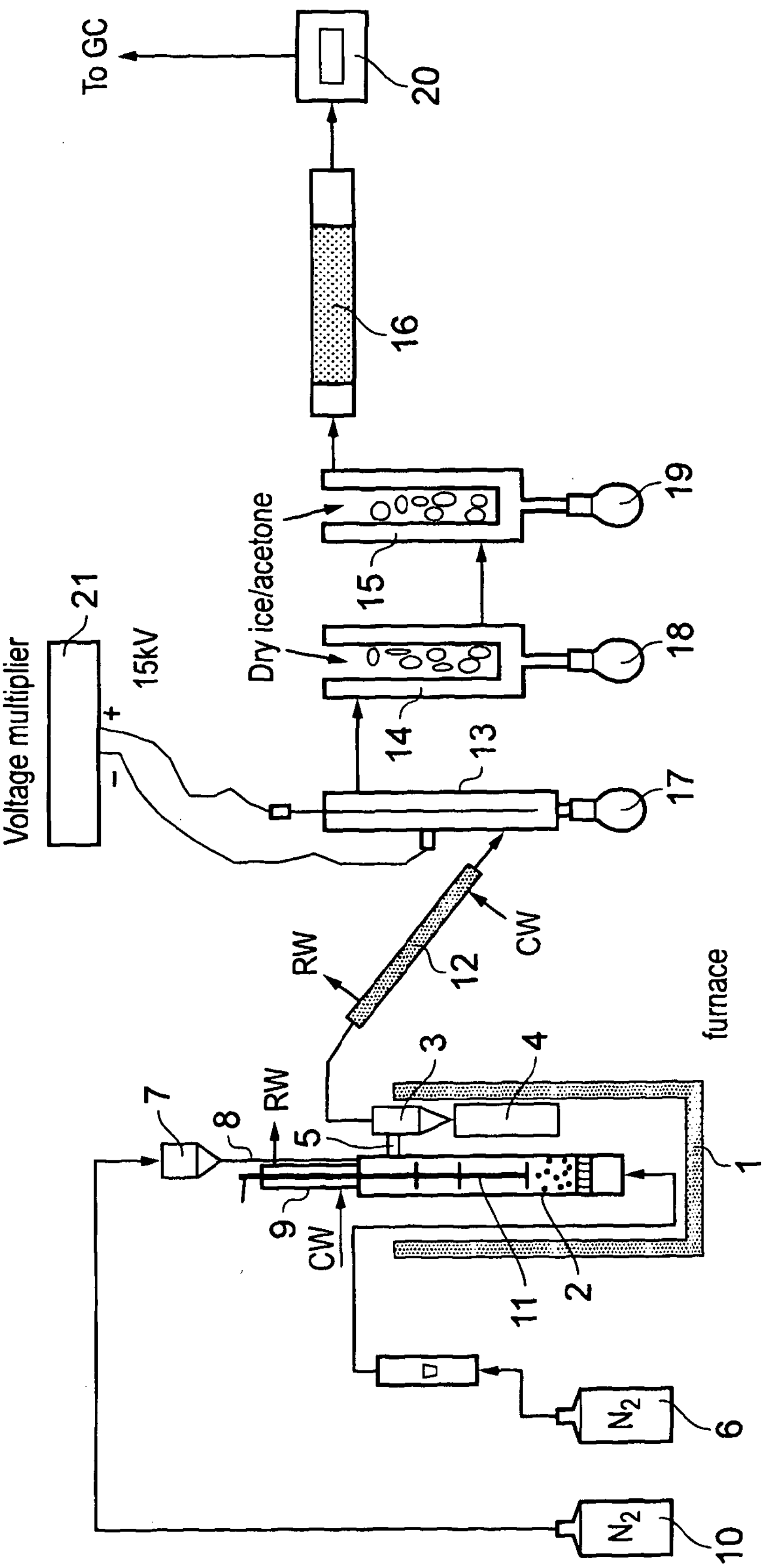
To GC
20
16
Voltage multiplier
21
15kV
+
−
Dry ice/acetone
14
15
18
19
13
17
RW
12
CW
furnace
3
4
7
8
RW
5
9
CW
11
2
1
$N_2$
6
$N_2$
10

FIG. 1

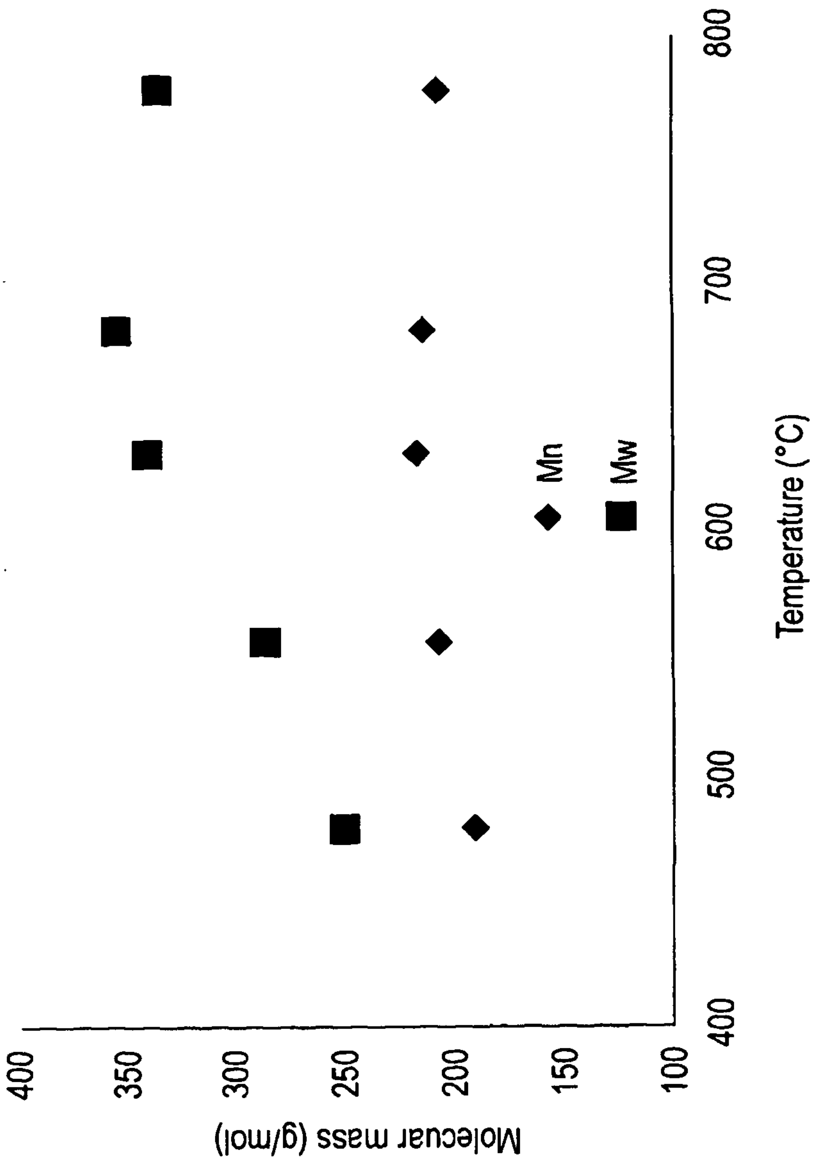
Molecuar mass (g/mol)
400
350
300
250
200
150
100
400
500
600
700
800
Temperature (°C)
Mn
Mw

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010045576 A
- WO 9508022 A


### Non-patent literature cited in the description


- **FREUDENBERG K.** *Science,* 1965, vol. 148, 595-600
- **SUN Y ; CHENG J.** *Bioresource Technology,* 2002, vol. 83, 1-11
- **MEIER D ; BERNS J ; FAIX O ; BALFANZ U ; BALDAUF W.** *Biomass and Bioenergy,* 1994, vol. 7, 99-105
- **IATRIDIS B ; GAVALAS GR.** *Industrial and Engineering Chemistry Process Design and Development,* 1979, vol. 18, 127-130
- **JEGERS HE ; KLEIN MT.** *Industrial and Engineering Chemistry Process Design and Development,* 1985, vol. 24, 173-183
- **FERDOUS D ; DALAI AK ; BEJ SK ; THRING RW.** *Energy and Fuels,* 2002, vol. 16, 1405-1412
- **KAMINSKY W ; SCHWEERS W ; SCHWESINGER H.** *Holzforschung,* 1980, vol. 34, 73-76
- **NOWAKOWSKI DJ ; BRIDGWATER AV ; ELLIOTT DC ; MEIER D ; DE WILD P.** *Journal of Analytial and Applied Pyrolysis,* 2010, vol. 88, 53-72
- **DE WILD P ; VAN DER LAAN R ; KLOEKHORST A ; HEERES E.** *Environmental Progress & Sustainable Energy,* 2009, vol. 28, 461-469
- **A. V. BRIDGWATER ; D. MEIER ; D. RADLEIN.** An overview of fast pyrolysis of biomass. *Organic Geochemistry,* December 1999, vol. 30 (12), 1479-1493
- **HORNE PA ; NUGRANAD N ; WILLIAMS PT.** *Journal of Analytical and Applied Pyrolysis,* 1995, vol. 34, 87-108
- **MACALA GS ; MATSON TD ; JOHNSON CL ; LEWIS RS ; IRETSKII AV ; FORD PC.** *Chemsuschem,* 2009, vol. 2 (3), 215-217
- **SCANLON JT ; WILLIS DE.** *Journal of Chromatographic Science,* 1985, vol. 23, 333-340
- **TONG HY ; KARASEK FW.** *Analytical Chemistry,* 1984, vol. 56, 2124-2128
- **JORGENSEN AD.** *Analytical Chemistry,* 1990, vol. 62, 683-689
- **THRING RW ; CHORNET E.** *Journal of Chromatographic A,* 1989, vol. 467, 441-446
- **OUCHI K ; OZAKI Y ; DAIGO A ; ITOH H ; MAKABE M.** *Fuel,* 1987, vol. 66, 731-734
- **CHO J ; CHOI C.** *Journal of Physical Chemistry,* 2008, vol. 112, 6907-6913
- **CABALLERO JA ; FONT R ; MARCILLA A.** *Journal of Analytial and Applied Pyrolysis,* 1996, vol. 36, 159-178
- **BENIGNI JD ; GOLDSTEIN IS.** *Journal of Polymer Science: Part C,* 1971, vol. 36, 467-475
- **JIANG G ; NOWAKOWSKI DJ ; BRIDGWATER AV.** Effect of the Temperature on the Composition of Lignin Pyrolysis Products. *Energy Fuels,* 2010, vol. 24 (8), 4470-4475
- **BRIDGWATER AV.** Review of fast pyrolysis of biomass and product upgrading. *Biomass and Bioenergy,* 2011, 1-27